# FASCICULE DE BREVET EUROPEEN

(11) **EP 0 266 291 B1**
(45) Date de publication et mention de la délivrance du brevet: **11.08.1993**
(21) Numéro de dépôt: 87440064.1
(22) Date de dépôt: 12.10.1987
(51) Int. Cl.: A01C 5/06, A01B 61/04, A01B 49/06

(54) **Machine combinée de travail du sol et de semis**
Bestellgerätekombination
Cultivating and sowing combination

(30) Priorité: 13.10.1986 FR 8614287
(43) Date de publication de la demande: 04.05.1988
(73) Titulaire: KUHN S.A., F-67700 Saverne (FR)
(72) Inventeur: Deutschle, Karl, D-7906 Blaustein 1 (DE)

(56) Documents cités:
- EP-A- 0 102 557
- FR-A- 2 525 855
- FR-A- 2 541 556
- GB-A- 1 359 491
- GB-A- 1 603 106
- US-A- 4 388 878
- US-A- 4 417 530
- US-A- 4 608 933
- Broschüre "Weichel-Ackersystem", Ernst Weichel Landmaschinenfabrik, D-7326 Heiningen/Württ./DE

## Description

La présente invention concerne une machine combinée de travail du sol comportant :
- un châssis,
- un rotor s'étendant sous ledit châssis et muni d'outils de travail du sol, l'axe longitudinal dudit rotor s'étendant transversalement à la direction d'avance au travail, ledit rotor étant entraîné dans un sens de rotation tel qu'à sa partie frontale ses outils de travail du sol tournent vers le bas,
- une barre de semis s'étendant derrière l'axe longitudinal du rotor, au moins sensiblement parallèlement à celui-ci, ladite barre de semis étant liée au châssis au moyen d'au moins un bras s'étendant, compte tenu du sens d'avance au travail, derrière le rotor,
- un semoir comportant des conduites d'alimentation en semence, et
- un dispositif de dépose de la semence au sol comportant des tubes d'amenée de la semence, dont les orifices de sortie sont agencés de façon à répartir la semence sous la barre de semis, un groupe de tubes étant aménagé derrière chacun des bras s'étendant derrière le rotor et servant à lier la barre de semis au châssis.

Dans le document "Weichel-Ackersystem" publié fin 1985, est décrite une telle machine combinée de travail du sol et de semis. La barre de semis de cette machine connue est réalisée en plusieurs tronçons. Chaque tronçon de cette barre de semis est lié rigidement au châssis de la machine au moyen d'un bras s'étendant, à partir de sa partie supérieure, vers le bas et quelque peu vers l'avant. A sa partie inférieure, le bras supporte le tronçon de barre de semis correspondant. Celui-ci comporte une partie rigide dont l'avant forme un angle aigu avec le sol et dont l'arrière s'étend horizontalement et supporte un tablier. Chaque bras supporte, le long de sa face arrière, un groupe de tubes dont les orifices de sortie sont agencés de façon à répartir la semence sous le tronçon de barre de semis correspondant.

Cette machine combinée de travail du sol et de semis connue travaille selon le procédé intéressant qui consiste à déposer la semence sous le flux de terre et, le cas échéant, de débris végétaux s'y trouvant. En effet, au travail, les outils fixés sur le rotor pénètrent dans le sol à la partie inférieure de leur trajectoire. Ce faisant, ils arrachent de la terre qu'ils véhiculent ensuite, le cas échéant, avec les débris végétaux s'y trouvant, vers l'arrière, par-dessus la barre de semis. Il se forme ainsi un flux qui se sépare au niveau de chaque bras afin de contourner ceux-ci. Ces flux de terre et, le cas échéant, de débris végétaux longent également les tubes d'amenée de la semence, s'écoulent par-dessus les tabliers et se redéposent sur le sol en couvrant la semence convoyée par les tubes et déposée sur le sol sous lesdits tabliers.

En pratique, il s'est cependant avéré que des problèmes sérieux apparaissaient lorsque la barre de semis ou les bras rencontraient un obstacle, tels que des pierres par exemple. En effet, comme les bras sont fixés rigidement sur le châssis, il peut se produire une détérioration de la barre de semis et/ou du bras lorsque la barre de semis accroche une pierre ancrée dans le sous-sol ou lorsqu'une pierre arrive dans l'espace entre le rotor et ledit bras.

Le but de la présente invention consiste à résoudre ce problème de cette machine combinée de travail du sol et de semis connue.

A cet effet, la machine combinée de travail du sol et de semis selon l'invention est caractérisée par le fait:
- que chaque bras est lié directement ou indirectement au châssis au moyen d'une articulation dont l'axe s'étend au moins sensiblement horizontalement et au moins sensiblement perpendiculairement à la direction d'avance au travail, ladite articulation s'étendant de surcroît dans une zone située au-dessus du rotor, et
- qu'un dispositif de sécurité maintient ledit bras dans sa position de travail, mais autorise, en cas de rencontre d'un obstacle, un escamotage dudit bras, vers l'arrière, par pivotement autour de l'axe de ladite articulation.

Grâce à cet agencement, les efforts apparaissant, en cas de rencontre d'un obstacle, sont encaissés par le dispositif de sécurité, de sorte que toute détérioration de la barre de semis et/ou d'un ou de plusieurs bras est éliminée. Comme, du reste, l'axe de pivotement s'étend dans une zone située au-dessus du rotor, on obtient un bon escamotage, alors que la partie supérieure du bras où sont raccordées les conduites d'alimentation du semoir aux tubes d'amenée de la semence correspondant audit bras, n'a à se déplacer que d'une valeur relativement limitée.

Dans la EP-A-0 102 557 est également décrite une machine combinée de travail du sol et de semis travaillant selon le procédé qui consiste à déposer la semence sous le flux de terre et, le cas échéant, de débris végétaux s'y trouvant. Cette machine connue comporte un châssis qui supporte d'une part un rotor et d'autre part une barre de semis. Le rotor est muni d'outils de travail du sol et son axe longitudinal s'étend perpendiculairement à la direction d'avance au travail. Le rotor est entraîné dans un sens de rotation tel qu'à sa partie frontale ses outils de travail du sol tournent vers le bas. La barre de semis, quant à elle, s'étend sous le rotor et derrière l'axe longitudinal de celui-ci. Elle s'étend du reste, parallèlement à ce dernier. Ladite barre de semis est liée aux deux parois latérales du châssis qui servent au guidage en rotation du rotor, au moyen de deux bras. La barre de semis est ainsi supportée à chacune de ses extrémités au moyen d'un bras. Chaque bras est lié, dans sa partie médiane, à la paroi latérale correspondante du châssis au moyen d'une articulation d'axe horizontal et perpendiculaire à la direction d'avance au travail. En vue latérale, il apparaît que cet axe s'étend derrière l'axe longitudinal du rotor et sensiblement à la même hauteur que celui-ci. A son extrémité inférieure, chaque bras est lié à la barre de semis, tandis qu'à son extrémité supérieure agit un ressort. De cette sorte, la barre de semis est maintenue dans sa position normale de travail avec possibilité d'escamotage en cas de rencontre d'un obstacle. Cette machine connue comporte également un semoir alimentant, au moyen de conduites d'alimentation en semence, un dispositif de dépose de la semence au sol. Ce dispositif est composé par deux groupes de tubes d'amenée de la semence intégrés dans la barre de semis. Les orifices d'entrée des tubes de chaque groupe s'étendent à l'extérieur de la paroi latérale correspondante du châssis, de sorte que toutes les conduites d'alimentation en semence passent à l'extérieur des parois latérales. Dans cette machine connue, il n'y a pas de tubes d'amenée de la semence qui s'étendent derrière les bras liant la barre de semis au châssis. Du reste, dans cette machine connue, l'axe de l'articulation liant chaque bras au châssis ne s'étend pas dans une zone située au-dessus du rotor.

Selon une caractéristique supplémentaire de l'invention, il peut être prévu d'agencer un dispositif de réglage qui permet de régler l'intensité de l'action du dispositif de sécurité.

Selon une autre caractéristique supplémentaire de l'invention, le dispositif de sécurité pourra comporter un organe élastiquement déformable. Ainsi, après franchissement de l'obstacle, le (les) bras correspondant(s) sera (seront) ramené(s) automatiquement dans sa (leur) position normale de travail.

Dans une réalisation avantageuse, il pourra être prévu qu'à chaque bras soit associé un dispositif de sécurité propre.

Selon une autre caractéristique supplémentaire de l'invention, il peut être prévu un dispositif de réglage permettant d'approcher ou d'éloigner le bras de l'axe longitudinal du rotor.

Selon une autre caractéristique supplémentaire de l'invention, il peut être prévu que chaque bras soit lié à une pièce intermédiaire, elle-même liée au châssis au moyen de l'articulation correspondante, ladite pièce intermédiaire comportant un logement dans lequel est logée la partie supérieure du bras, et étant, de préférence, guidée latéralement dans une chape correspondante du châssis.

Dans une telle réalisation, il peut également être avantageusement prévu un dispositif de réglage permettant de faire glisser axialement le bras dans le logement de la pièce intermédiaire, dans le but du réglage de la position de la barre de semis par rapport au rotor. Avantageusement également, ce logement pourra être dirigé de telle sorte à s'étendre vers le bas et vers l'avant.

Dans une autre réalisation avantageuse, il pourra être prévu que la barre de semis soit réalisée en plusieurs tronçons et qu'à chaque tronçon de barre de semis soit associé un bras.

D'autres caractéristiques de la présente invention sont contenues dans les autres sous-revendications et dans la description ci-dessous d'un exemple de réalisation non limitatif de l'invention, se référant au dessin annexé sur lequel :
- la figure 1 représente partiellement une machine combinée de travail du sol et de semis selon l'invention en vue de côté et en coupe suivant le plan I - I défini sur la figure 2, et
- la figure 2 représente partiellement, en vue de dessus, la machine de la figure 1.

Cette machine combinée de travail du sol et de semis est constituée d'un châssis (1) sous lequel s'étend, transversalement à la direction de travail (2), un rotor (3) muni d'outils de travail du sol (4) et tournant dans le sens indiqué par la flèche (5).

Derrière ce rotor (3) s'étend, dans une direction sensiblement transversale à la direction de travail (2) et sensiblement parallèlement au rotor (3), une barre de semis (6) en plusieurs tronçons dont chacun est lié au châssis (1) par un bras (7) s'étendant vers le bas et vers l'avant.

Le châssis (1) est constitué d'une poutre (8) sensiblement horizontale et s'étendant dans une direction sensiblement transversale à la direction de travail (2). A chaque extrémité, la poutre (8) comporte une plaque latérale (81) qui s'étend vers le bas. Entre les extrémités inférieures desdites plaques latérales (81) s'étend le rotor (3) qui y est guidé en rotation au moyen de paliers et qui est entraîné par des moyens d'entraînement pour tourner dans le sens indiqué par la flèche (5). Ces paliers et les moyens d'entraînement n'ont pas été représentés, car ils sont à la portée de l'homme de l'art.

La machine combinée de travail du sol et de semis comporte par ailleurs un semoir (82) connu de l'homme de l'art, dont on n'a représenté que l'extrémité des conduites (83) qui sont liées à des tubes (27) d'amenée de la semence, fixés à la face arrière (26) des bras (7).

La machine comporte par ailleurs un dispositif d'attelage connu de l'homme de l'art et également non représenté.

Des plaques (9) sont fixées par paires, sensiblement perpendiculairement, sur la poutre (8). Chaque paire de plaques (9) forme ainsi une chape (10) sur laquelle viennent se monter d'autres composants, notamment une pièce intermédiaire (11). Cette pièce intermédiaire (11) est constituée d'une forme creuse et allongée (fourreau) qui s'étend vers le bas et vers l'avant dans laquelle vient s'ajuster, de façon coulissante, un bras (7).

Ce bras (7) possède à son extrémité supérieure un trou taraudé (12) dans lequel est vissé un tirant (13). Ce tirant (13) traverse la partie supérieure (14) du fourreau et y prend appui afin de pouvoir régler axialement la position du bras (7) dans le fourreau. Un dispositif de vis à pression (15) bloque le bras (7) dans le fourreau après son réglage.

A l'avant de la pièce intermédiaire (11) est rapporté un tube (16) dans lequel passe un axe (17) lié à la chape (10). La pièce intermédiaire (11) peut donc pivoter autour de cet axe (17) dans un plan sensiblement vertical et sensiblement parallèle à la direction de travail (2). De plus, la partie inférieure (18) de chaque bras (7) est maintenue en avant par un dispositif de sécurité élastique (84) agissant sur la pièce intermédiaire (11). Ce dispositif de sécurité élastique (84) comprend un axe (19) lié de façon articulée par son extrémité avant à une patte (20) solidaire de la chape (10), et un ressort de compression (21) coaxial à l'axe (19). Ce ressort de compression (21), en prenant appui sur une rondelle (22) solidaire de l'axe (19), maintient en butée contre l'extrémité arrière de l'axe (19) un coulisseau (23) monté de façon articulée à la partie supérieure (14) de la pièce intermédiaire (11). En sus, la position de l'axe (19) peut être réglée par rapport à la patte (20). Ceci permet de régler la position normale du bras (7) correspondant par rapport au rotor (3). De même, il est également possible de régler la précontrainte du ressort (21) en modifiant la position de la rondelle (22) sur l'axe (19).

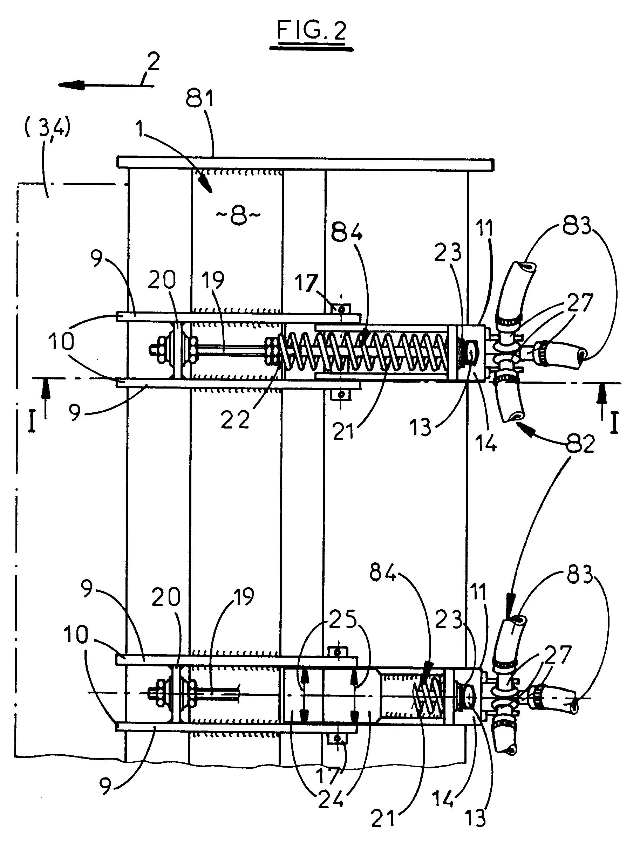

Des plaques (24), sensiblement horizontales, sont solidaires de ladite pièce intermédiaire (11) et sont ajustées dans leur largeur (25) (voir figure 2) mesurée sensiblement transversalement à la direction de travail (2) de façon à coulisser entre les deux plaques (9) de la chape (10). Ce guidage maintient la pièce intermédiaire (11) transversalement à la direction de travail (2).

Sensiblement parallèlement à la face arrière (26) de chaque bras (7) s'étendent des tubes d'amenée de la semence (27). Chaque tube (27) se termine à sa partie inférieure par une goulotte (28) permettant de répartir la semence sur le sol (85). La partie inférieure de ces tubes (27) est partiellement emprisonnée dans un carénage (29) afin de les protéger de la terre véhiculée vers l'arrière par le rotor (3), tandis qu'à leur partie supérieure les tubes (27) sont liés à la pièce intermédiaire (11) par un collier (30).

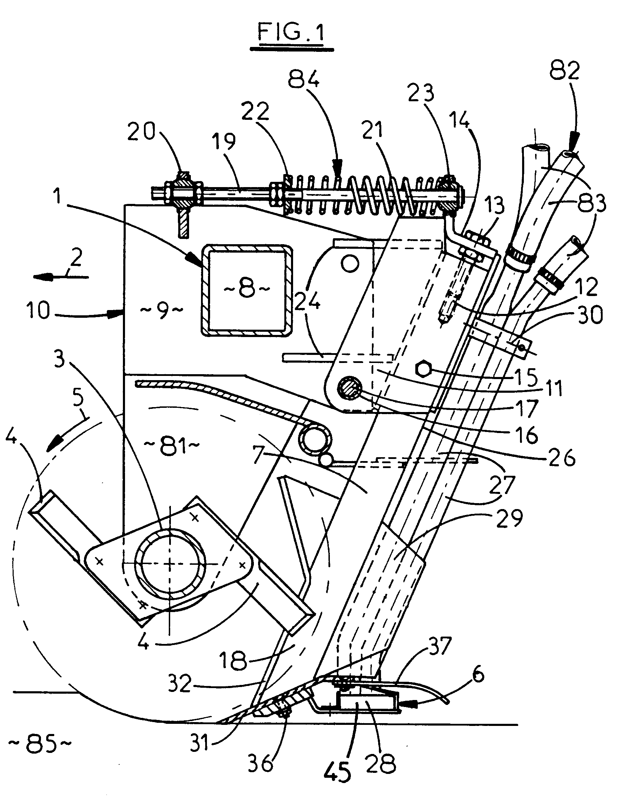

Sur la figure 1, on voit que la partie inférieure (18) d'un bras (7) supporte un tronçon de barre de semis (6). Celui-ci comporte une partie active (31) liée au bras (7) par des moyens de fixation (36). La partie active (31) forme un angle aigu avec le sol (85) et se poursuit à sa partie arrière par un tablier (37).

Sur sa face avant, le bras (7) présente un bord d'attaque (32) biseauté afin de faciliter l'écoulement sur les faces latérales dudit bras (7), de la terre véhiculée par le rotor (3).

Les tubes d'amenée de la semence (27) longent la face arrière (26) du bras (7) et sont partiellement emprisonnés dans le carénage (29). L'extrémité inférieure de chaque tube (27) est liée à une goulotte (28) destinée, comme dit plus haut, à répartir correctement la semence sur le sol (85).

Au-dessus des goulottes (28) est agencé le tablier (37) s'étendant vers l'arrière, sur lequel s'écoule la terre véhiculée par le rotor (3) avant qu'elle ne recouvre la semence déposée sur le sol (85).

Cette machine combinée de travail du sol et de semis selon l'invention et telle qu'elle est décrite ci-dessus, fonctionne comme expliqué ci-après.

Lorsque ladite machine avance, les outils de travail du sol (4) du rotor (3), ayant une trajectoire qui pénètre dans le sol (85), arrachent de la terre, puis la véhicule, en la soulevant, vers l'arrière de la machine. Cette terre s'écoule sur la partie active (31) de chaque tronçon de la barre de semis (6) en des flux séparés par les bras (7) afin de contourner les tubes (27) d'amenée de la semence fixés derrière ces bras (7). Simultanément, le semoir (82) alimente, à l'aide des conduites (83), les tubes (27) avec de la semence. Ladite semence s'écoule ensuite dans les tubes (27) et les goulottes (28) d'où elle sort par les orifices de sortie rectangulaires (45). La terre qui est véhiculée le long des flancs latéraux des bras (7), glisse sur le tablier (37) au-dessus des goulottes (28) pour finalement quitter ledit tablier (37) et venir recouvrir la semence déposée sur le sol (85) par lesdites goulottes (28).

Au cas où la partie active (31) d'un tronçon accrochait un obstacle ou qu'un corps dur arrivait dans l'espace entre le rotor (3) et le bras (7), ledit bras (7) avec les tubes (27) correspondants, ainsi que le tronçon correspondant de la barre de semis (6) peuvent s'escamoter vers l'arrière en pivotant autour de l'axe (17) et revenir en position de travail grâce à l'action du dispositif élastique (84) dès que l'obstacle est passé.

De plus, la position du bras (7) (c'est-à-dire du tronçon de barre de semis (6) correspondant) par rapport aux outils de travail du sol (4) peut être réglée d'une part au moyen de la patte (20) et de l'axe (19) et d'autre part au moyen du tirant (13).

L'invention ne se limite pas à l'exemple décrit. En effet diverses modifications sont possibles sans que l'on ne sorte du cadre de celle-ci tel que défini dans les revendications suivantes.

## Revendications

1. Machine combinée de travail du sol et de semis comportant :
- un châssis (1) ;
- un rotor (3) s'étendant sous ledit châssis (1) et muni d'outils (4) de travail du sol, l'axe longitudinal dudit rotor (3) s'étendant transversalement à la direction d'avance (2) au travail, ledit rotor (3) étant entraîné dans un sens de rotation (5) tel qu'à sa partie frontale ses outils (4) de travail du sol tournent vers le bas ;
- une barre de semis (6) s'étendant derrière l'axe longitudinal du rotor (3), au moins sensiblement parallèlement à celui-ci, ladite barre de semis (6) étant liée au châssis (1) au moyen d'au moins un bras (7) s'étendant, compte tenu du sens d'avance (2) au travail, derrière le rotor (3) ;
- un semoir (82) comportant des conduites (83) d'alimentation en semence, et
- un dispositif de dépose (27, 28) de la semence au sol comportant des tubes (27) d'amenée de la semence dont les orifices de sortie (45) sont agencés de façon à répartir la semence sous la barre de semis (6), un groupe de tubes (27) étant aménagé derrière chacun des bras (7) s'étendant derrière le rotor (3) et servant à lier la barre de semis (6) au châssis (1),
caractérisée par le fait :
- que chaque bras (7) est lié directement ou indirectement au châssis (1) au moyen d'une articulation (16, 17) dont l'axe s'étend au moins sensiblement horizontalement et au moins sensiblement perpendiculairement à la direction d'avance (2) au travail, ladite articulation (16, 17) s'étendant de surcroît dans une zone située au-dessus du rotor (3), et
- qu'un dispositif de sécurité (84) maintient ledit bras (7) dans sa position de travail, mais autorise, en cas de rencontre d'un obstacle, un escamotage dudit bras (7), vers l'arrière, par pivotement autour de l'axe de ladite articulation (16, 17).

2. Machine combinée de travail du sol et de semis selon la revendication 1, caractérisée par le fait qu'un dispositif de réglage (19, 22) permet de régler l'intensité de l'action du dispositif de sécurité (84).

3. Machine combinée de travail du sol et de semis selon la revendication 1 ou 2, caractérisée par le fait que le dispositif de sécurité (84) comporte un organe élastiquement déformable (21).

4. Machine combinée de travail du sol et de semis selon les revendications 2 et 3, caractérisée par le fait que le dispositif de réglage (19, 22) de l'intensité de l'action du dispositif de sécurité (84) permet le réglage de la précontrainte de l'organe élastiquement déformable (21).

5. Machine combinée de travail du sol et de semis selon la revendication 3 ou 4, caractérisée par le fait que l'organe élastiquement déformable (21) comporte un ressort de compression (21).

6. Machine combinée de travail du sol et de semis selon l'une au moins des revendications 1 à 5, caractérisée par le fait qu'à chaque bras (7) est associé un dispositif de sécurité (84) propre.

7. Machine combinée de travail du sol et de semis selon l'une au moins des revendications 1 à 6, caractérisée par le fait qu'un dispositif de réglage (19, 20) permet d'approcher ou d'éloigner le bras (7) de l'axe longitudinal du rotor (3).

8. Machine combinée de travail du sol et de semis selon l'une au moins des revendications 1 à 7, caractérisée par le fait que chaque bras (7) est lié à une pièce intermédiaire (11), elle-même liée au châssis (1) au moyen de l'articulation (16, 17) correspondante, ladite pièce intermédiaire (11) comportant un logement dans lequel est logée la partie supérieure dudit bras (7).

9. Machine combinée de travail du sol et de semis selon la revendication 8, caractérisée par le fait que ladite pièce intermédiaire (11) est guidée latéralement dans une chape (10) correspondante du châssis (1).

10. Machine combinée de travail du sol et de semis selon la revendication 8 ou 9, caractérisée par le fait qu'un dispositif de réglage (12, 13, 14) permet de faire glisser axialement le bras (7) dans le logement de la pièce intermédiaire (11), dans le but du réglage de la position de la barre de semis (6) par rapport au rotor (3).

11. Machine combinée de travail du sol et de semis selon la revendication 10, caractérisée par le fait que le dispositif de réglage permettant de faire glisser axialement le bras (7) dans le logement de la pièce intermédiaire (11), comporte un tirant (13) traversant la partie supérieure (14) de ladite pièce intermédiaire (11) tout en y prenant appui, ledit tirant (13) étant vissé dans un trou taraudé (12) aménagé dans la partie supérieure du bras (7) au moins sensiblement suivant l'axe longitudinal de celle-ci.

12. Machine combinée de travail du sol et de semis selon la revendication 10 ou 11, caractérisée par le fait qu'un élément de fixation (15) est prévu pour immobiliser le bras (7) dans le logement de la pièce intermédiaire (11) après réglage de la position du bras (7) par rapport à ladite pièce intermédiaire (11).

13. Machine combinée de travail du sol et de semis selon la revendication 12, caractérisée par le fait que ledit élément de fixation (15) comporte au moins une vis de pression (15).

14. Machine combinée de travail du sol et de semis selon l'une au moins des revendications 8 à 13, caractérisée par le fait que le logement de la pièce intermédiaire (11) est dirigé vers le bas et vers l'avant.

15. Machine combinée de travail du sol et de semis selon l'une au moins des revendications 8 à 14, caractérisée par le fait que le logement de la pièce intermédiaire (11) est réalisé sous forme de fourreau.

16. Machine combinée de travail du sol et de semis selon l'une au moins des revendications 1 à 15, caractérisée par le fait que la barre de semis (6) est réalisée en plusieurs tronçons et qu'à chaque tronçon de barre de semis (6) est associé un bras (7).

17. Machine combinée de travail du sol et de semis selon les revendications 7 et 16, caractérisée par le fait qu'à chaque bras (7) est associé un dispositif de réglage (19, 20) permettant d'approcher ou d'éloigner le bras (7) de l'axe longitudinal du rotor (3).

## Claims

1. A combined soil working and sowing machine comprising:
- a frame (1);
- a rotor (3) extending under the said frame (1) and equipped with tools (4) for working the soil, the longitudinal axis of the said rotor (3) extending transversely to the direction of advance (2) during operation, the said rotor (3) being driven in a direction of rotation (5) such that at the front part its tools (4) for working the soil turn downwards;
- a sowing bar (6) extending behind the longitudinal axis of the rotor (3), at least substantially parallel to the latter, the said sowing bar (6) being connected to the frame by means of at least one arm (7) extending, taking account of the direction of advance (2) during operation, behind the rotor (3);
- a sowing machine (82) comprising seed feeding pipes (83), and
- a device (27, 28) for putting the seed into the soil comprising seed supply tubes (27) whose outlet openings (45) are directed in such a way as to spread the seed under the sowing bar (6), a group of tubes (27) being arranged behind each of the arms (7) extending behind the rotor (3) and serving to connect the sowing bar (6) to the frame (1),
characterised in that:
- each arm (7) is connected directly or indirectly to the frame (1) by means of an articulation (16, 17) whose axis extends at least substantially horizontal and at least substantially perpendicular to the direction of advance (2) during operation, the said articulation (16, 17) extending moreover into the area situated above the rotor (3), and
- a safety device (84) keeps the said arm (7) in its working position, but allows, should it meet an obstacle, a retraction of the said arm (7) towards the rear, by pivoting around the axis of the said articulation (16, 17).

2. A combined soil working and sowing machine in accordance with claim 1, characterised in that a regulating device (19, 22) permits the regulation of the intensity of action of the safety device (84).

3. A combined soil working and sowing machine in accordance with claim 1 or 2, characterised in that the safety device (84) comprises an element (21) which is elastically deformable.

4. A combined soil working and sowing machine in accordance with claims 2 and 3, characterised in that the device (19, 22) for regulating the intensity of action of the safety device (84) permits the adjustment of the pre-tensioning of the elastically deformable element (21).

5. A combined soil working and sowing machine in accordance with claim 3 or 4, characterised in that the elastically deformable element (21) comprises a compression spring (21).

6. A combined soil working and sowing machine in accordance with at least one of claims 1 to 5, characterised in that each arm (7) is associated with its own safety device (84).

7. A combined soil working and sowing machine in accordance with at least one of claims 1 to 6, characterised in that a regulating device (19, 20) allows the arm (7) to be moved nearer to or farther away from the longitudinal axis of the rotor (3).

8. A combined soil working and sowing machine in accordance with at least one of claims 1 to 7, characterised in that each arm (7) is connected to an intermediary piece (11), itself connected to the frame (1) by means of the corresponding articulation (16, 17), the said intermediary piece (11) comprising a casing in which is housed the upper part of the said arm (7).

9. A combined soil working and sowing machine in accordance with claim 8, characterised in that the said intermediary piece (11) is guided laterally in a corresponding yoke (10) of the frame (1).

10. A combined soil working and sowing machine in accordance with claim 8 or 9, characterised in that a regulating device (12, 13, 14) permits the arm (7) to slide axially in the casing of the intermediary piece (11), with the arm of regulating the position of the sowing bar (6) in relation to the rotor (3).

11. A combined soil working and sowing machine in accordance with claim 10, characterised in that the regulating device permitting the arm (7) to slide axially in the casing of the intermediary piece (11) comprises a tie rod (13) penetrating the upper part (14) of the said intermediary piece (11) while resting on it, the said tie rod (13) being screwed into a threaded hole (12) arranged in the upper part of the arm (7) at least substantially following the longitudinal axis of the latter.

12. A combined soil working and sowing machine in accordance with claim 10 or 11, characterised in that a fixing element (15) is provided to immobilise the arm (7) in the casing of the intermediary piece (11) after regulating of the position of the arm (7) in relation to the said intermediary piece (11).

13. A combined soil working and sowing machine in accordance with claim 12, characterised in that the said fixing element (15) comprises at least one set-screw (15).

14. A combined soil working and sowing machine in accordance with at least one of claims 8 to 13, characterised in that the casing of the intermediary piece (11) is directed downwards and forwards.

15. A combined soil working and sowing machine in accordance with at least one of claims 8 to 14, characterised in that the casing of the intermediary piece (11) is made in the shape of a sleeve.

16. A combined soil working and sowing machine in accordance with at least one of claims 1 to 15, characterised in that the sowing bar (6) is made in several sections and that each section of the sowing bar (6) is associated with an arm (7).

17. A combined soil working and sowing machine in accordance with claims 7 to 16, characterised in that each arm (7) is associated with a regulating device (19, 20) permitting the arm (7) to be moved nearer to or farther away from the longitudinal axis of the rotor (3).

## Patentansprüche

1. Kombinierte Bodenbearbeitungs- und Saatmaschine mit:
- einem Gestell (1);
- einem Rotor (3), der sich unter dem Gestell (1) befindet und mit Arbeitswerkzeugen (4) versehen ist, wobei sich die Längsachse des Rotors (3) quer zur Arbeitsvorschubrichtung (2) erstreckt und der Rotor (3) in einer solchen Drehrichtung (5) angetrieben wird, dass die Arbeitswerkzeuge (4) an seinem Vorderteil nach unten rotieren;
- einem Säbalken (6), der hinter der Längsachse des Rotors (3) zumindest im wesentlichen parallel zu dieser verläuft, wobei der Säbalken (6) mit dem Gestell (1) über zumindest einen Arm (7) verbunden ist, der sich, in Arbeitsvorschubrichtung (2) betrachtet, hinter dem Rotor (3) befindet;
- einer Sämaschine (82) mit Leitungen (83) zur Zufuhr von Saatgut und
- einer Vorrichtung (27, 28) zum Ablegen des Saatguts im Boden mit Rohren (27) zur Zufuhr des Saatguts, deren Auslassöffnungen (45) derart angeordnet sind, dass sie das Saatgut unter dem Säbalken (6) verteilen, wobei eine Gruppe von Rohren (27) hinter jedem Arm (7) angebracht ist, der hinter dem Rotor (3) verläuft und zur Verbindung des Säbalkens (6) mit dem Gestell (1) dient,
dadurch gekennzeichnet,
- dass jeder Arm (7) direkt oder indirekt mittels einer Gelenkverbindung (16, 17), deren Achse zumindest im wesentlichen horizontal und zumindest im wesentlichen rechtwinkelig zur Arbeitsvorschubrichtung (2) verläuft, mit dem Gestell verbunden ist, welche Gelenkverbindung (16, 17) sich übrigens in einer Zone oberhalb des Rotors (3) erstreckt, und
- dass eine Sicherheitsvorrichtung (84) den Arm (7) in der Arbeitsstellung hält, aber im Fall des Auftreffens auf ein Hindernis ein Ausweichen des Armes (7) nach hinten durch Schwenken um die Achse der Gelenkverbindung (16, 17) erlaubt.

2. Kombinierte Bodenbearbeitungs- und Saatmaschine nach Anspruch 1, dadurch gekennzeichnet, dass eine Einstellvorrichtung (19, 22) die Einstellung der Intensität der Wirkung der Sicherheitsvorrichtung (84) ermöglicht.

3. Kombinierte Bodenbearbeitungs- und Saatmaschine nach Anspruch 1 oder 2, dadurch gekennzeichnet, dass die Sicherheitsvorrichtung (84) ein elastisch deformierbares Organ (21) umfasst.

4. Kombinierte Bodenbearbeitungs- und Saatmaschine nach den Ansprüchen 2 und 3, dadurch gekennzeichnet, dass die Vorrichtung (19, 22) zur Einstellung der Intensität der Wirkung der Sicherheitsvorrichtung (84) die Einstellung der Vorspannung des elastisch deformierbaren Organs (21) ermöglicht.

5. Kombinierte Bodenbearbeitungs- und Saatmaschine nach Anspruch 3 oder 4, dadurch gekennzeichnet, dass das elastisch deformierbare Organ (21) eine Druckfeder (21) umfasst.

6. Kombinierte Bodenbearbeitungs- und Saatmaschine nach zumindest einem der Ansprüche 1 bis 5, dadurch gekennzeichnet, dass jedem Arm (7) eine eigene Sicherheitsvorrichtung (84) zugeordnet ist.

7. Kombinierte Bodenbearbeitungs- und Saatmaschine nach zumindest einem der Ansprüche 1 bis 6, dadurch gekennzeichnet, dass eine Verstellvorrichtung (19, 20) ermöglicht, den Arm (7) der Längsachse des Rotors (3) zu nähern oder von ihr zu entfernen.

8. Kombinierte Bodenbearbeitungs- und Saatmaschine nach zumindest einem der Ansprüche 1 bis 7, dadurch gekennzeichnet, dass jeder Arm (7) mit einem Zwischenstück (11) verbunden ist, das seinerseits mit dem Gestell (1) durch ein entsprechendes Gelenk (16, 17) verbunden ist, welches Zwischenstück (11) eine Aufnahme umfasst, in welcher der Oberteil des Armes (7) gelagert ist.

9. Kombinierte Bodenbearbeitungs- und Saatmaschine nach Anspruch 8, dadurch gekennzeichnet, dass das Zwischenstück (11) seitlich in einem entsprechenden Bügel (10) des Gestells (1) geführt ist.

10. Kombinierte Bodenbearbeitungs- und Saatmaschine nach Anspruch 8 oder 9, dadurch gekennzeichnet, dass eine Verstellvorrichtung (12, 13, 14) ermöglicht, den Arm (7) axial in der Aufnahme des Zwischenstücks (11) gleiten zu lassen, um die Lage des Säbalkens (6) in bezug auf den Rotor (3) zu verstellen.

11. Kombinierte Bodenbearbeitungs- und Saatmaschine nach Anspruch 10, dadurch gekennzeichnet, dass die Verstellvorrichtung, die ermöglicht, dass der Arm (7) axial in der Aufnahme des Zwischenstücks (11) verschoben wird, ein den Oberteil (14) des Zwischenstücks (11) unter gleichzeitiger Abstützung daran durchsetzendes Zugorgan (13) umfasst, welches Zugorgan (13) in ein im Oberteil des Armes (7) zumindest im wesentlichen entlang dessen Längsachse hergestelltes Gewindeloch (12) eingeschraubt ist.

12. Kombinierte Bodenbearbeitungs- und Saatmaschine nach Anspruch 10 oder 11, dadurch gekennzeichnet, dass ein Befestigungselement (15) vorgesehen ist, um den Arm (7) nach Einstellung der Position des Armes (7) in bezug auf das Zwischenstück (11) in der Aufnahme des Zwischenstücks (11) zu fixieren.

13. Kombinierte Bodenbearbeitungs- und Saatmaschine nach Anspruch 12, dadurch gekennzeichnet, dass das Befestigungselement (15) zumindest eine Stellschraube (15) umfasst.

14. Kombinierte Bodenbearbeitungs- und Saatmaschine nach zumindest einem der Ansprüche 8 bis 13, dadurch gekennzeichnet, dass die Aufnahme des Zwischenstücks (11) nach unten und nach vorne gerichtet ist.

15. Kombinierte Bodenbearbeitungs- und Saatmaschine nach zumindest einem der Ansprüche 8 bis 14, dadurch gekennzeichnet, dass die Aufnahme des Zwischenstucks (11) scheidenförmig ausgebildet ist.

16. Kombinierte Bodenbearbeitungs- und Saatmaschine nach zumindest einem der Ansprüche 1 bis 15, dadurch gekennzeichnet, dass der Säbalken (6) aus mehreren Teilstücken hergestellt ist und dass jedem Teilstück des Säbalkens (6) ein Arm (7) zugeordnet ist.

17. Kombinierte Bodenbearbeitungs- und Saatmaschine nach den Ansprüchen 7 und 16, dadurch gekennzeichnet, dass jedem Arm (7) eine Verstell vorrichtung (19, 20) zugeordnet ist, die es ermöglicht, den Arm (7) de Längsachse des Rotors (3) zu nähern oder von ihr zu entfernen.
